# EUROPEAN PATENT SPECIFICATION

(11) **EP 4 177 002 B1**
(45) Date of publication and mention of the grant of the patent: **03.09.2025**
(21) Application number: 21858109.8
(22) Date of filing: 21.07.2021
(51) Int. Cl.: B23K 31/00, B23K 9/032, B23K 9/04, B23K 26/34, B33Y 10/00, B33Y 50/00

(54) **METHOD FOR MANUFACTURING MULTI-LAYER MOLDED ARTICLE**
VERFAHREN ZUR HERSTELLUNG EINES MEHRSCHICHTIGEN FORMKÖRPERS
PROCÉDÉ PERMETTANT DE FABRIQUER UN ARTICLE MOULÉ MULTICOUCHE

(30) Priority: 19.08.2020 JP 2020138613
(43) Date of publication of application: 10.05.2023
(73) Proprietor: KABUSHIKI KAISHA KOBE SEIKO SHO (KOBE STEEL, LTD.), Hyogo 651-8585 (JP)
(72) Inventor: HIDA, Masatoshi, Kobe-shi, Hyogo 651-2271 (JP); YOSHIKAWA, Akinori, Kobe-shi, Hyogo 651-2271 (JP)
(74) Representative: Müller-Boré & Partner Patentanwälte PartG mbB
(86) International application number: PCT/JP2021/027414
(87) International publication number: WO 2022/038960

(56) References cited:
- WO-A1-2019/098006
- JP-A- 2018 001 750
- JP-A- 2018 126 760
- JP-A- 2019 136 711
- JP-A- 2020 001 059
- JP-A- H10 505 799
- US-A1- 2018 319 097
- US-B2- 10 350 875
- LI YONGZHE ET AL: "A layers-overlapping strategy for robotic wire and arc additive manufacturing of multi-layer multi-bead components with homogeneous layers", THE INTERNATIONAL JOURNAL OF ADVANCED MANUFACTURING TECHNOLOGY, SPRINGER, LONDON, vol. 96, no. 9, 4 March 2018 (2018-03-04), pages 3331 - 3344, XP036509308, ISSN: 0268-3768, [retrieved on 20180304], DOI: 10.1007/S00170-018-1786-3

## Description

### TECHNICAL FIELD

The present invention relates to a method for manufacturing an additively-manufactured object, see claim 1.

### BACKGROUND ART

In recent years, needs for 3D printers as a means of production have been increasing, and especially as for application to metal materials, research and development have been carried out for practical use in the aircraft industry and the like. A 3D printer using a metal material is configured to melt a metal powder or a metal wire by using a heat source such as a laser or an arc, and deposit the molten metal to manufacture an additively-manufactured object.

As a technique for manufacturing such an additively-manufactured object by welding, Patent Literature 1 discloses that a contour portion and a fill portion surrounded by the contour portion are built under different welding conditions.

Patent Literature 2 describes a method of adjusting a target position of a welding torch, a welding current, a welding voltage, and the like by measuring a shape of a weld bead that is already welded with a laser sensor in real time, and selecting a welding condition from a database according to the measured bead shape when an iron column for construction is welded.

Further, Non-Patent Literature 1 describes a method of adjusting a height and width of a weld bead to be formed, by controlling a welding voltage and a travel speed according to a bead shape measured by a laser sensor in additive manufacturing using a welding wire.

US 2018/0319097 A1 (describing the preamble of claim 1) shows methods and systems for hybrid deposition rate near net shape additive manufacturing. WO 2019/098006 A1 describes a method and an apparatus for manufacturing a layered product. Yongzhe Li et al., The International Journal of Advanced Manufacturing Technology (2018) 96 pages 3331-3344, describe a layers-overlapping strategy for robotic wire and arc additive manufacturing of multi-layer multi-bead components with homogeneous layers. JP 2019-136711 A describes a manufacturing method of layered objects. US 10,350,875 B2 describes printing a layer in response to a substrate contour.

### CITATION LIST

### PATENT LITERATURE

Patent Literature 1: JP 2018-187679 A
Patent Literature 2: JP H09-182962 A

### NON-PATENT LITERATURE

Non-Patent Literature 1: Han Q., Li Y., Zhang G. (2018) Online Control of Deposited Geometry of Multi-layer Multi-bead Structure for Wire and Arc Additive Manufacturing. In: Chen S., Zhang Y., Feng Z. (eds) Transactions on Intelligent Welding Manufacturing. Transactions on Intelligent Welding Manufacturing. Springer, Singapore

### SUMMARY OF INVENTION

### TECHNICAL PROBLEM

In a building method of building in advance an outer frame constituted by a contour portion and filling an inner side of the outer frame as in Patent Literature 1, it is conceivable to perform feedback control of a bead formation position, a welding condition, or the like in a next step while measuring a shape of a formed weld bead by a shape sensor as in Patent Literature 2 and Non-Patent Literature 1.

However, in this case, when a shape in the vicinity of the outer frame constituted by the contour portion is measured by the shape sensor, a shape of a region in which the weld bead is deposited in the area surrounded by the outer frame may not be measured by the shape sensor due to the outer frame becoming an obstacle. Thus, it may be difficult to form the weld bead while performing correction in real time by the feedback control, and a depositing accuracy of the weld bead may be reduced.

Accordingly, an object of the present invention is to provide a method for manufacturing an additively-manufactured object, by which a high-quality additively-manufactured object can be manufactured by depositing weld beads with a high accuracy based on a measurement result obtained by a shape sensor.

### SOLUTION TO PROBLEM

The present invention provides a method as defined in appended independent claim 1. Specific embodiments thereof are defined in the appended dependent claims.

### ADVANTAGEOUS EFFECTS OF INVENTION

In the present invention, it is possible to manufacture a high-quality additively-manufactured object by depositing weld beads with a high accuracy based on a measurement result obtained by a shape sensor.

### BRIEF DESCRIPTION OF DRAWINGS

FIG. 1 is a schematic configuration diagram of a manufacturing system for manufacturing an additively-manufactured object based on a manufacturing method in an embodiment of the present invention.
FIG. 2 is a schematic side view of a shape sensor.
FIG. 3 is a schematic cross-sectional view of the additively-manufactured object as an example of additively-manufactured objects.
FIG. 4 is a schematic cross-sectional view of the additively-manufactured object in which a first weld bead layer is built in an area surrounded by a frame portion.
FIG. 5 is a schematic cross-sectional view showing a positional relationship between the frame portion and the shape sensor.
FIG. 6 is a schematic perspective view of the additively-manufactured object in the middle of manufacturing and shows a shape pre-measurement process.
FIG. 7 is a schematic perspective view of the additively-manufactured object in the middle of manufacturing and shows an application example of the shape pre-measurement process.
FIG. 8A and FIG. 8B illustrate diagrams showing the additively-manufactured object in the middle of building based on a measured value, and FIG. 8A is a schematic cross-sectional view of the additively-manufactured object and FIG. 8B is a schematic diagram showing a measured profile.
FIG. 9A and FIG. 9B illustrate diagrams showing the additively-manufactured object in the middle of building based on a depositing plan, and FIG. 9A is a schematic cross-sectional view of the additively-manufactured object and FIG. 9B is a schematic diagram showing a planned profile.
FIG. 10A and FIG. 10B illustrate diagrams showing a pre-correction process, and FIG. 10A is a combined diagram of the measured profile and the planned profile and FIG. 10B is a diagram showing cross sectional shapes of weld beads constituting a second weld bead layer corrected in consideration of a deviation amount.
FIG. 11 is a schematic cross-sectional view of the additively-manufactured object manufactured through the pre-correction process.

### DESCRIPTION OF EMBODIMENTS

Hereinafter, an embodiment of the present invention will be described in detail with reference to the drawings.

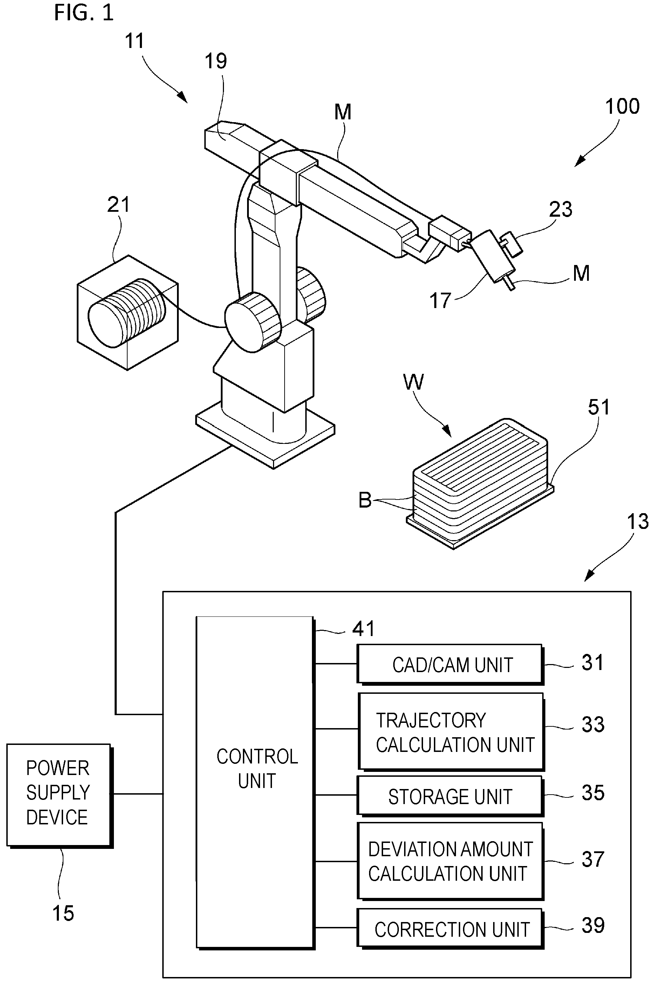

FIG. 1 is a configuration diagram of a manufacturing system used for manufacturing an additively-manufactured object in the present invention.

A manufacturing system 100 for the additively-manufactured object in this configuration includes an additive manufacturing device 11, a controller 13 that integrally controls the additive manufacturing device 11, and a power supply device 15.

The additive manufacturing device 11 includes a welding robot 19 in which a torch 17 is provided on a tip shaft thereof, and a filler metal supply unit 21 that supplies a filler metal (a welding wire) M to the torch 17. A shape sensor 23 is provided together with the torch 17 on the tip shaft of the welding robot 19.

The welding robot 19 is a multi-joint robot, and the filler metal M is supported by the torch 17 attached to the tip shaft of a robot arm so as to be continuously suppliable. A position and posture of the torch 17 can be set three-dimensionally desirably within a movable range of the robot arm.

The torch 17 includes a shield nozzle (not shown), and a shielding gas is supplied from the shield nozzle. An arc welding method may be either a consumable electrode-based method such as shielded metal arc welding method or carbon dioxide gas arc welding method, or a non-consumable electrode-based method such as TIG welding method or plasma arc welding method, and is appropriately selected depending on an additively-manufactured object to be manufactured.

For example, in the case of the consumable electrode-based method, a contact tip is disposed inside the shield nozzle, and the contact tip holds the filler metal M to which a melting current is supplied. The torch 17 generates an arc from a tip of the filler metal M in a shielding gas atmosphere while holding the filler metal M. The filler metal M is fed from the filler metal supply unit 21 to the torch 17 by a delivery mechanism (not shown) attached to the robot arm or the like. Then, when the filler metal M fed continuously is melted and solidified while the torch 17 is moved, a linear weld bead B, which is a melt-solidified body of the filler metal M, is formed on a base plate 51, and an additively-manufactured object W composed of the weld bead B is manufactured.

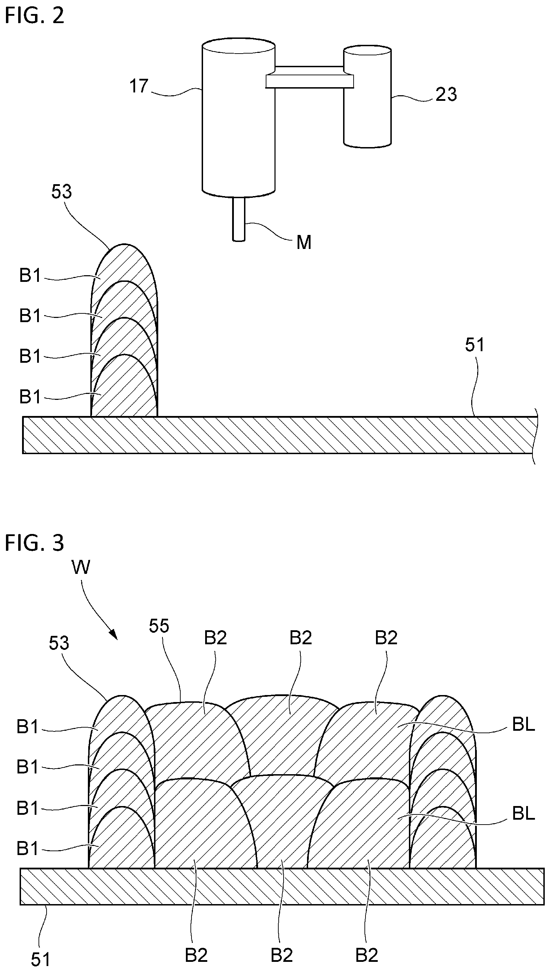

As shown in FIG. 2, the shape sensor 23 is arranged in parallel with the torch 17, and is configured to be moved together with the torch 17. The shape sensor 23 is a sensor that measures a shape of a portion serving as a base when the weld bead B is formed. As the shape sensor 23, for example, a laser sensor that acquires reflected light of emitted laser light as height data is used. As the shape sensor 23, a three-dimensional shape measuring camera may be used.

The controller 13 includes a CAD/CAM unit 31, a trajectory calculation unit 33, a storage unit 35, a deviation amount calculation unit 37, a correction unit 39, and a control unit 41 to which these units are connected.

The CAD/CAM unit 31 receives or creates shape data (CAD data and the like) of the additively-manufactured object W to be manufactured.

The trajectory calculation unit 33 divides a shape model of three-dimensional shape data into a plurality of weld bead layers according to a height of the weld bead B. Then, for each layer of the divided shape model, a depositing plan which defines a trajectory of the torch 17 for forming the weld bead B, and heating conditions (including welding conditions and the like for obtaining a bead width, a bead depositing height, and the like) for forming the weld bead B is created.

The deviation amount calculation unit 37 compares the depositing plan created by the trajectory calculation unit 33 with a measured value obtained by the shape sensor 23. Then, the deviation amount calculation unit 37 calculates a deviation amount between a shape based on the depositing plan and a shape based on the measured value in the portion serving as the base when the weld bead B is formed.

The correction unit 39 corrects, based on the deviation amount calculated by the deviation amount calculation unit 37, a welding condition based on the depositing plan for forming the weld bead B.

The control unit 41 drives the welding robot 19, the power supply device 15, and the like by executing a drive program stored in the storage unit 35. That is, the welding robot 19 moves the torch 17 in response to a command from the controller 13 and melts the filler metal M with an arc to form the weld bead B on the base plate 51.

The base plate 51 is made of a metal plate such as a steel plate, and is basically larger than a bottom surface (a surface of a lowermost layer) of the additively-manufactured object W. The base plate 51 is not limited to a plate shape, and may be a base of another shape such as a block body or a rod body.

Any commercially available welding wire can be used as the filler metal M. For example, a wire specified by solid wires for MAG and MIG welding of mild steel, high tensile strength steel, and low temperature service steel (JISZ 3312), flux-cored wires for arc welding of mild steel, high tensile strength steel, and low temperature service steel (JISZ 3313), or the like can be used.

Next, an example of an additively-manufactured object manufactured by the manufacturing method in the present embodiment is described.

FIG. 3 is a schematic cross-sectional view of the additively-manufactured object W as an example of the additively-manufactured objects W.

As shown in FIG. 3, the additively-manufactured object W includes a frame portion 53 built by depositing weld beads B1 on the base plate 51. Further, the additively-manufactured object W includes an internal building portion 55 built by weld beads B2 in the area surrounded by the frame portion 53. The internal building portion 55 is formed by depositing weld bead layers BL each constituted by the weld beads B2.

Next, a case of manufacturing the additively-manufactured object W is described.

### (Frame Portion Building Step)

The filler metal M is melted while the torch 17 of the additive manufacturing device 11 is moved by the driving of the welding robot 19. Then, the weld beads B1 made of the molten filler metal M are supplied and deposited on the base plate 51, and the frame portion 53 which has a substantially rectangular shape in a plan view and is constituted by the weld beads B1 deposited on the base plate 51 is built.

### (Internal Building Step)

The weld beads B2 are formed in the area surrounded by the frame portion 53. Then, the weld beads B2 are formed in a width direction in the area surrounded by the frame portion 53. Accordingly, the weld bead layers BL each constituted by a plurality of weld beads B2 formed in parallel are formed in the area surrounded by the frame portion 53. Then, the weld bead layers BL are deposited in the area surrounded by the frame portion 53 to build the internal building portion 55.

In this manufacturing method, the internal building portion 55 is built in the area surrounded by the frame portion 53 after the building of the frame portion 53, and thus the internal building portion 55 can be efficiently built by the weld bead B2 having a large cross-sectional area.

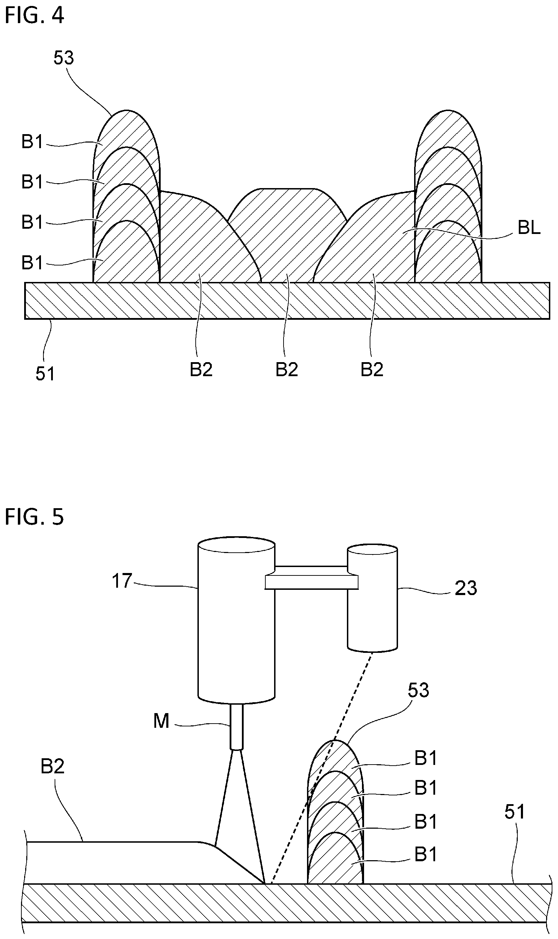

However, as shown in FIG. 4, when the weld bead layers BL each constituted by the weld beads B2 are deposited in order to build the internal building portion 55 in the area surrounded by the frame portion 53, for example, valley-like recesses may be formed in a boundary portion between the weld beads B2 each constituting a first weld bead layer BL, and an upper surface of the first weld bead layer BL may have an uneven shape. That is, when a second weld bead layer BL that is an upper layer is built, a shape of the upper surface of the first weld bead layer BL that is a base of the weld bead layer BL may deviate from the shape based on the depositing plan. Thus, even if the second weld bead layer BL is built on the first weld bead layer BL in accordance with the depositing plan, the additively-manufactured object W having a target shape may not be manufactured.

In this case, when the weld beads B2 constituting the internal building portion 55 are formed, a shape of the base may be measured in real time, and a measurement result may be fed back to correct the welding condition of the weld beads B2. However, as shown in FIG. 5, when the shape of the base is measured by the shape sensor 23 in the vicinity of the frame portion 53, the frame portion 53 is an obstacle, the shape cannot be measured by the shape sensor 23, and it is difficult to perform feedback control in real time.

Therefore, in the present embodiment, when the weld bead layer BL is built in order to manufacture the additively-manufactured object W having the target shape, a shape pre-measurement process, a deviation amount calculation process, and a pre-correction process, which are described below, are performed. Here, a case where the second weld bead layer BL is built is described as an example.

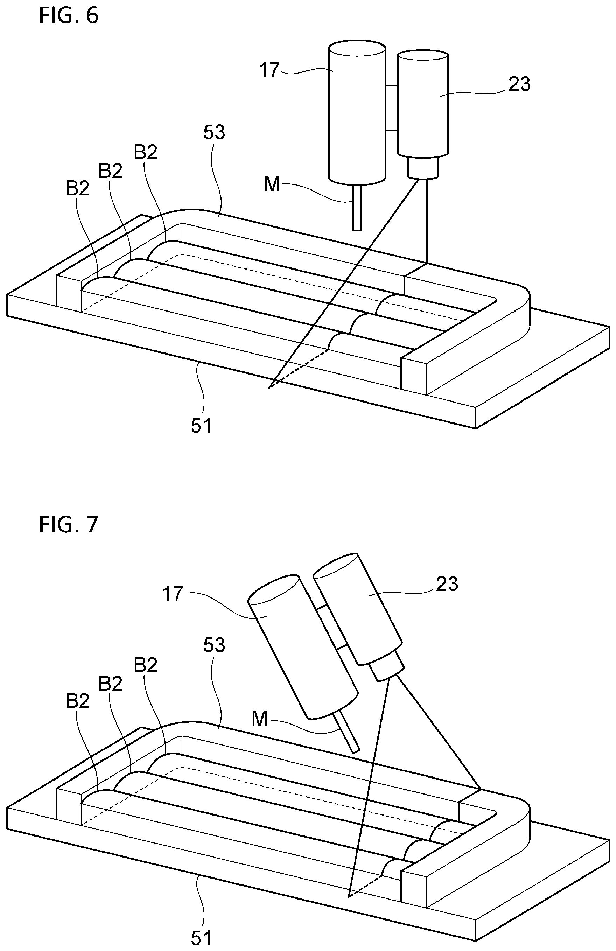

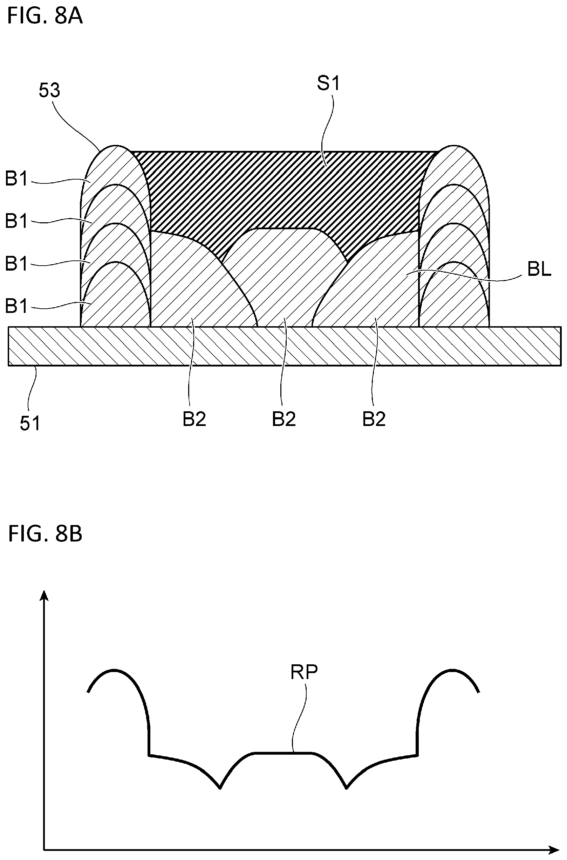

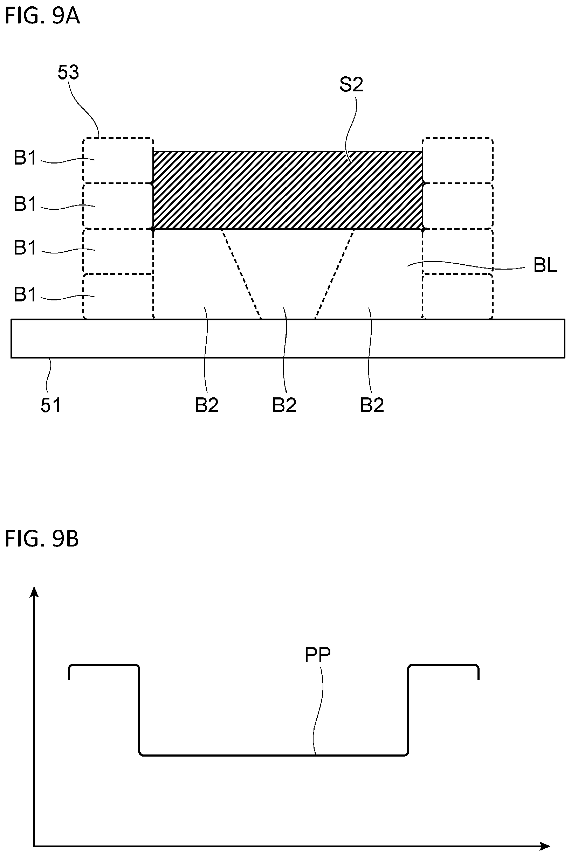

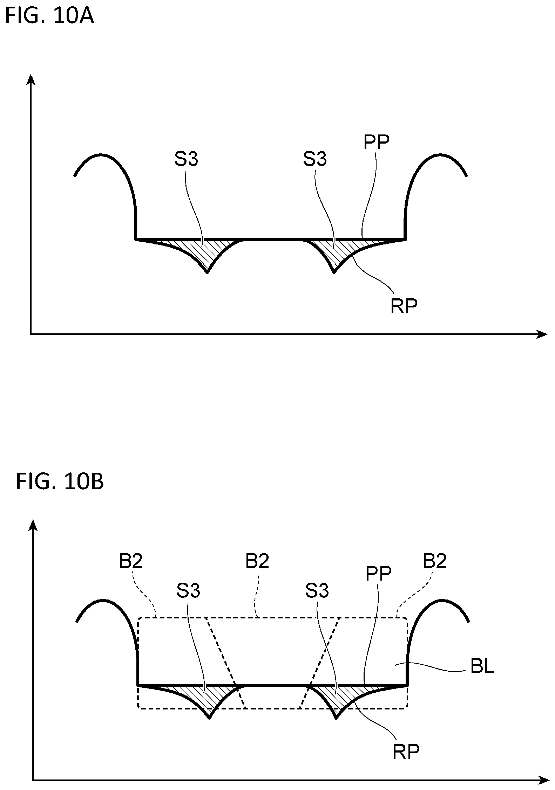

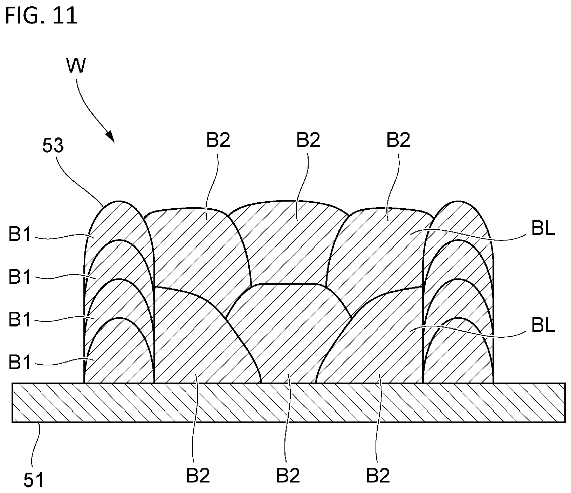

FIG. 6 is a schematic perspective view of the additively-manufactured object W in the middle of manufacturing and shows the shape pre-measurement process. FIG. 7 is a schematic perspective view of the additively-manufactured object W in the middle of manufacturing and shows an application example of the shape pre-measurement process. FIG. 8A and FIG. 8B illustrate diagrams showing the additively-manufactured object W in the middle of building based on the measured value, and FIG. 8A is a schematic cross-sectional view of the additively-manufactured object W and FIG. 8B is a schematic diagram showing a measured profile RP. FIG. 9A and FIG. 9B illustrate diagrams showing the additively-manufactured object W in the middle of building based on the depositing plan, and FIG. 9A is a schematic cross-sectional view of the additively-manufactured object W and FIG. 9B is a schematic diagram showing a planned profile PP. FIG. 10A and FIG. 10B illustrates diagrams showing the pre-correction process, and FIG. 10A is a schematic diagram showing a result of combining the measured profile RP and the planned profile PP, and FIG. 10B is a schematic diagram showing cross sectional shapes of the weld beads B2 constituting the second weld bead layer BL corrected in consideration of a deviation amount. FIG. 11 is a schematic cross-sectional view of the additively-manufactured object W manufactured through the pre-correction process.

### (Shape Pre-Measurement Process)

After the building of the frame portion 53 performed by the frame portion building step and the first weld bead layer BL is built by the internal building step (see FIG. 4), the shape pre-measurement process for measuring a shape of the additively-manufactured object in the middle of the building is performed before the building of the second weld bead layer BL, as shown in FIG. 6. In the shape pre-measurement process, the welding robot 19 is driven to move the shape sensor 23 arranged in parallel with the torch 17 along a planned building portion of the second weld bead layer BL. Then, the shape sensor 23 measures a shape along a formation direction of the weld beads B2. The shape may be measured by the shape sensor 23 in a direction different from a direction along the formation direction of the weld beads B2. At this time, the shape sensor 23 interferes with the frame portion 53 that is already built, and thus it may be difficult to measure a shape of an inner edge portion of the frame portion 53. In such a case, as shown in FIG. 7, the shape sensor 23 is inclined inward relative to the frame portion 53, and a measurement range of the shape sensor 23 is directed to an inner side of the frame portion 53. Accordingly, it is possible to satisfactorily measure a shape of the inner side of the frame portion 53 while the measurement performed by the shape sensor 23 is avoided from being blocked by the frame portion 53 itself.

FIG. 8A shows a cross sectional shape of the additively-manufactured object in the middle of the building based on the measured value obtained by the shape sensor 23. In the cross-sectional shape based on the measured value, a region S1 in FIG. 8A is a cross sectional shape of the second weld bead layer BL to be deposited. Then, as shown in FIG. 8B, the measured profile RP of the additively-manufactured object in the middle of the building is created based on the cross-sectional shape based on the measured value.

### (Deviation Amount Calculation Process)

The deviation amount calculation unit 37 compares the measured profile of the additively-manufactured object in the middle of the building created based on the measured value obtained by the shape sensor 23 with the planned profile of the additively-manufactured object in the middle of the building based on the depositing plan, and calculates a deviation amount of the measured profile with respect to the planned profile.

FIG. 9A shows a cross sectional shape of the additively-manufactured object in the middle of the building based on the depositing plan.

In the cross-sectional shape based on the depositing plan, a region S2 in FIG. 9A is a cross sectional shape of the second weld bead layer BL to be deposited. Then, as shown in FIG. 9B, the planned profile PP of the additively-manufactured object in the middle of the building is created based on the cross-sectional shape in the depositing plan.

As shown in FIG. 10A, the deviation amount calculation unit 37 compares the measured profile RP with the planned profile PP, determines deviation regions S3 (hatched portions in FIG. 10A) of the measured profile RP with respect to the planned profile PP, and calculates a deviation amount which is a cross sectional area of the deviation region S3. The deviation amount calculation unit 37 calculates the deviation amount and determines a deviation position.

### (Pre-correction Process)

Next, based on the deviation amount and the deviation position between the planned profile PP and the measured profile RP, the correction unit 39 executes the pre-correction process of correcting the welding condition of the weld beads B2 for building the second weld bead layer BL. Specifically, as shown in FIG. 10B, the correction unit 39 corrects the welding condition of the weld beads B2 such that a surface of the second weld bead layer BL is formed in accordance with the depositing plan, in consideration of the deviation amount and the deviation position between the planned profile PP and the measured profile RP. In the present example, a cross sectional area of the actually built first weld bead layer BL is smaller than that of the planned first weld bead layer BL based on the depositing plan. In this case, the welding condition is corrected so as to increase a cross sectional area of the weld beads B2 constituting the second weld bead layer BL. When the cross-sectional area of the actually built first weld bead layer BL is larger than that of the planned first weld bead layer BL based on the depositing plan, the welding condition is corrected so as to decrease the cross-sectional area of the weld beads B2 constituting the second weld bead layer BL. The correction of the welding condition for increasing or decreasing the cross-sectional area of the weld beads B2 is performed by adjusting a travel speed, a supply amount of the filler metal M, or a welding current during forming the weld beads B2. This correction is preferably performed by, for example, searching a database of welding conditions stored in advance for a welding condition of weld beads having a cross sectional area that covers excess or shortage.

Thereafter, as shown in FIG. 11, the weld beads B2 are formed on the first weld bead layer BL under the corrected welding condition, and the second weld bead layer BL is built. Thus, the deviation between the planned profile PP and the measured profile RP is compensated, and an upper surface of the second weld bead layer BL constituted by the weld beads B2 formed under the corrected welding condition is approximated to the shape based on the depositing plan.

As described above, according to the method for manufacturing an additively-manufactured object in the present embodiment, the frame portion 53 is built, and the internal building portion 55 is built in the area surrounded by the frame portion 53, and thus the internal building portion 55 can be efficiently built by the weld beads B2 having a large cross sectional area, for example. As described above, in the method for manufacturing the additively-manufactured object W in which the internal building portion 55 is built in the area surrounded by the frame portion 53, the shape of the base on which the weld bead layer BL is to be deposited is measured to create the measured profile RP, the planned profile PP of the base is determined based on the depositing plan, and the deviation amount of the measured profile RP with respect to the planned profile PP is calculated. When the weld bead layer BL is deposited on the base in the area surrounded by the frame portion 53, the welding condition for the weld beads B2 constituting the weld bead layer BL in the depositing plan is corrected in order to reduce the deviation amount. Therefore, even if the shape of the base in the area surrounded by the frame portion 53 deviates from the planned profile PP determined based on the depositing plan, the weld bead layer BL constituted by the weld beads B2 deposited on the base can be approximated to a shape in the depositing plan. Accordingly, even if it is difficult to form the weld beads B2 while measuring the shape of the base in real time and performing the feedback control because of a presence of the frame portion 53, it is possible to satisfactorily build the internal building portion 55 based on the depositing plan.

The shape sensor 23 which measures the shape of the base is arranged in parallel with the torch 17 that is moved based on the depositing plan, and thus the trajectory of the torch 17 based on the depositing plan can be used for a measurement operation performed by the shape sensor 23. Accordingly, it is possible to easily measure the shape of the base by the shape sensor 23 without creating a trajectory program for moving the shape sensor 23.

In addition, when the shape sensor 23 is arranged in parallel with the torch 17, it is also possible to satisfactorily measure a shape of a portion in the vicinity of the inner side of the frame portion 53 while preventing the interference of the shape sensor 23 with the frame portion 53 by measuring the shape by inclining the shape sensor 23 inward relative to the frame portion 53.

In the internal building step of building the internal building portion 55, for example, at a center position away from the frame portion 53 where the measurement of the shape is not obstructed by the frame portion 53, the welding condition for the weld bead B2 may be corrected in real time depending on the shape of the base. Specifically, a real-time correction process may be performed by measuring the shape of the base by the shape sensor 23 arranged in parallel with the torch 17, and forming the weld beads B2 by the torch 17 while correcting the welding condition for the weld beads B2 based on the depositing plan in real time based on a measured shape of the base.

As described above, in the internal building step, the real-time correction process is performed at a position where the measurement of the shape is not obstructed by the frame portion 53 together with the pre-correction process, and thus the internal building portion 55 in the area surrounded by the frame portion 53 can be built satisfactorily and more efficiently.

In a pre-measurement process, the inner side of the frame portion 53, the inner side including the frame portion 53, where it is difficult to measure the shape in real time and perform the feedback control in real time, is measured along the frame portion 53 in advance. Therefore, it is possible to efficiently measure a shape of a specific portion of the base and perform the pre-correction process as compared with a case where a shape of an entire range in the area surrounded by the frame portion 53 is measured in advance.

In a case where at least three weld bead layers BL are deposited in the area surrounded by the frame portion 53, it is preferable to perform the shape pre-measurement process, the deviation amount calculation process, and the pre-correction process when third and subsequent weld bead layers BL are built. In addition, when the first weld bead layer BL is built, a shape of the base plate 51 serving as a base of the first weld bead layer BL may be measured, and the deviation amount calculation process and the pre-correction process may be performed.

As described above, the present invention is not limited to the above embodiments, and combinations of the respective configurations in the embodiments, and changes and applications made by those skilled in the art based on the description of the specification and the common technology are also intended by the present invention and are included within the scope to be protected.

According to the method for manufacturing the additively-manufactured object as defined in appended claim 1, the frame portion is built, and the internal building portion is built in the area surrounded by the frame portion, and thus the internal building portion can be efficiently built by the weld beads having a large cross-sectional area, for example. As described above, in the method for manufacturing the additively-manufactured object in which the internal building portion is built in the area surrounded by the frame portion, the shape of the base on which the weld bead layer is to be deposited is measured to create the measured profile, the planned profile of the base is determined based on the depositing plan, and the deviation amount of the measured profile with respect to the planned profile is calculated. When the weld bead layer is deposited on the base in the area surrounded by the frame portion, the welding condition for the weld beads constituting the weld bead layer in the depositing plan is corrected in order to reduce the deviation amount. Therefore, even if the shape of the base in the area surrounded by the frame portion deviates from the planned profile determined based on the depositing plan, the weld bead layer constituted by the weld beads deposited on the base can be approximated to a shape in the depositing plan. Accordingly, even if it is difficult to form the weld beads while measuring the shape of the base in real time and performing feedback control in real time because of a presence of the frame portion, it is possible to satisfactorily build the internal building portion based on the depositing plan.

According to the method for manufacturing the additively-manufactured object as defined in appended claim 2, the shape sensor is arranged in parallel with the torch that is moved based on the depositing plan, and thus a trajectory of the torch based on the depositing plan can be used for a measurement operation performed by the shape sensor. Accordingly, it is possible to easily measure the shape of the base by the shape sensor.

According to the method for manufacturing the additively-manufactured object as defined in appended claim 3, the shape is measured while inclining the shape sensor inward relative to the frame portion. Accordingly, it is possible to satisfactorily measure a shape of a portion in the vicinity of an inner side of the frame portion while preventing interference of the shape sensor with the frame portion.

According to the method for manufacturing the additively-manufactured object as defined in appended claims 4 and 5, the real-time correction process is performed together with the pre-correction process when the internal building portion is built in the area surrounded by the frame portion. That is, at a position where the measurement of the shape is not obstructed by the frame portion, the welding condition for the weld beads is corrected in real time according to the shape of the base. Accordingly, the internal building portion in the area surrounded by the frame portion can be built satisfactorily and more efficiently.

According to the method for manufacturing the additively-manufactured object as defined in appended claim 1, the inner side of the frame portion, the inner side including the frame portion, is measured along the frame portion, preferably in advance. That is, by measuring mainly in advance the portion in the vicinity of the inner side of the frame portion where it is difficult to measure the shape in real time and perform the feedback control in real time, it is possible to efficiently measure a shape of a specific portion of the base and perform the pre-correction process as compared with a case where a shape of an entire range in the area surrounded by the frame portion is measured in advance.

### REFERENCE SIGNS LIST

- 17:: Torch
- 23:: Shape sensor
- 53:: Frame portion
- 55:: Internal building portion
- B, B1, B2:: Weld bead
- BL:: Weld bead layer
- M:: Filler metal
- PP:: Planned profile
- RP:: Measured profile

## Claims

1. A method for manufacturing an additively-manufactured object by depositing weld beads (B, B1, B2) obtained by melting and solidifying a filler metal, the method comprising:
a depositing planning step of creating a depositing plan for depositing the weld beads (B, B1, B2) based on a target shape of the additively-manufactured object; and
a building step of repeatedly depositing the weld beads (B, B1, B2) based on the depositing plan, wherein
the building step comprises:
a frame portion building step of building a frame portion by a first plurality of the weld beads (B1); and
an internal building step of building an internal building portion in which a weld bead layer including a second plurality of the weld beads (B2) formed in parallel in an area surrounded by the frame portion is deposited, and
**characterised in that** the internal building step comprises:
a pre-measurement process of measuring a shape of a base on which the weld bead layer is to be deposited;
a deviation amount calculation process of creating a measured profile of the base based on the measured shape of the base, determining a planned profile of the base based on the depositing plan, and calculating a deviation amount of the measured profile with respect to the planned profile; and
a pre-correction process of correcting a welding condition of the second plurality of the weld beads (B2) constituting the weld bead layer in the depositing plan in order to reduce the deviation amount when the weld bead layer is deposited on the base; and
wherein in the pre-measurement process, a shape of an inner side of the frame portion, the inner side including the frame portion, is measured along the frame portion.

2. The method for manufacturing an additively-manufactured object according to claim 1, wherein in the pre-measurement process, the shape of the base is measured by a shape sensor arranged in parallel with a torch configured to melt the filler metal to form the weld bead.

3. The method for manufacturing an additively-manufactured object according to claim 2, wherein in the pre-measurement process, the shape is measured under the condition where the shape sensor is inclined inward relative to the frame portion.

4. The method for manufacturing an additively-manufactured object according to claim 2, wherein the internal building step includes a real-time correction process, and in the real-time correction process, the shape of the base is measured by the shape sensor, and the second plurality of the weld beads (B2) are formed while correcting the welding condition of the second plurality of the weld beads (B2) based on the depositing plan in real time based on the measured shape of the base.

5. The method for manufacturing an additively-manufactured object according to claim 3, wherein the internal building step includes a real-time correction process, and in the real-time correction process, the shape of the base is measured by the shape sensor, and the second plurality of the weld beads (B2) are formed while correcting the welding condition of the second plurality of the weld beads (B2) based on the depositing plan in real time based on the measured shape of the base.

## Patentansprüche

1. Verfahren zum Herstellen eines additiv hergestellten Objekts durch Aufbringen von Schweißraupen (B, B1, B2), die durch Schmelzen und Verfestigen eines Füllmetalls erhalten werden, wobei das Verfahren umfasst:
einen Aufbringungsplanungsschritt des Erzeugens eines Aufbringungsplans zum Aufbringen der Schweißraupen (B, B1, B2) auf der Grundlage einer Zielform des additiv hergestellten Objekts; und
einen Bauschritt des wiederholten Aufbringens der Schweißraupen (B, B1, B2) auf der Grundlage des Aufbringungsplans, wobei
der Bauschritt umfasst:
einen Rahmenabschnittbauschritt des Aufbauens eines Rahmenabschnitts durch eine erste Mehrzahl der Schweißraupen (B1); und
einen Innenaufbauschritt des Bauens eines Innenbauabschnitts, bei dem eine Schweißraupenschicht, die eine zweite Mehrzahl der Schweißraupen (B2) enthält, die parallel in einem von dem Rahmenabschnitt umgebenen Bereich ausgebildet sind, aufgebracht wird, und
**dadurch gekennzeichnet, dass** der Innenbauschritt umfasst:
ein Vormessungsverfahren des Messens einer Form einer Basis, auf der die Schweißraupenschicht aufzubringen ist;
ein Abweichungsbetragsberechnungsverfahren des Erzeugens eines gemessenen Profils der Basis basierend auf der gemessenen Form der Basis, des Bestimmens eines geplanten Profils der Basis basierend auf dem Aufbringungsplan und des Berechnens eines Abweichungsbetrags des gemessenen Profils in Bezug auf das geplante Profil; und
ein Vorkorrekturverfahren des Korrigierens einer Schweißbedingung der zweiten Mehrzahl der Schweißraupen (B2), die die Schweißraupenschicht in dem Aufbringungsplan bilden, um den Abweichungsbetrag zu reduzieren, wenn die Schweißraupenschicht auf der Basis aufgebracht wird; und
wobei in dem Vormessungsverfahren eine Form einer inneren Seite des Rahmenabschnitts, wobei die innere Seite den Rahmenabschnitt enthält, entlang des

2. Verfahren zur Herstellung eines additiv gefertigten Objekts nach Anspruch 1, wobei in dem Vormessungsverfahren die Form der Basis durch einen Formsensor gemessen wird, der parallel zu einem Brenner angeordnet ist, der so konfiguriert ist, dass er das Füllmetall zur Bildung der Schweißraupe schmilzt.

3. Verfahren zur Herstellung eines additiv gefertigten Objekts nach Anspruch 2, wobei in dem Vormessungsverfahren die Form unter der Bedingung gemessen wird, dass der Formsensor relativ zum Rahmenteil nach innen geneigt ist.

4. Verfahren zur Herstellung eines additiv gefertigten Objekts nach Anspruch 2, wobei der Innenbauschritt ein Echtzeit-Korrekturverfahren enthält und in dem Echtzeit-Korrekturverfahren die Form der Basis durch den Formsensor gemessen wird und die zweite Mehrzahl der Schweißraupen (B2) gebildet wird, während die Schweißbedingung der zweiten Mehrzahl der Schweißraupen (B2) auf der Grundlage des Aufbringungsplans in Echtzeit auf der Grundlage der gemessenen Form der Basis korrigiert wird.

5. Verfahren zur Herstellung eines additiv gefertigten Objekts nach Anspruch 3, wobei der Innenbauschritt ein Echtzeit-Korrekturverfahren enthält und in dem Echtzeit-Korrekturverfahren die Form der Basis durch den Formsensor gemessen wird und die zweite Mehrzahl der Schweißraupen (B2) gebildet wird, während die Schweißbedingung der zweiten Mehrzahl der Schweißraupen (B2) basierend auf dem Ablageplan in Echtzeit basierend auf der gemessenen Form der Basis korrigiert wird.

## Revendications

1. Procédé de fabrication d'un objet fabriqué de manière additive en déposant des cordons de soudure (B, B1, B2) obtenus en faisant fondre et solidifiant un métal d'apport, le procédé comprenant :
une étape de planification de dépôt consistant à créer un plan de dépôt pour déposer les cordons de soudure (B, B1, B2) en fonction d'une forme cible de l'objet fabriqué de manière additive ; et
une étape de construction consistant à déposer de manière répétée les cordons de soudure (B, B1, B2) en fonction du plan de dépôt, dans lequel l'étape de construction comprend :
une étape de construction de portion de cadre consistant à construire une portion de cadre par une première pluralité des cordons de soudure (B1) ; et
une étape de construction interne consistant à construire une portion de construction interne dans laquelle une couche de cordons de soudure incluant une seconde pluralité des cordons de soudure (B2) formés parallèlement à une zone entourée de la portion de cadre est déposée, et
**caractérisé en ce que** l'étape de construction interne comprend :
un processus de mesure préalable consistant à mesurer une forme d'une base sur laquelle la couche de cordons de soudure doit être déposée ;
un processus de calcul de quantité d'écart consistant à créer un profil mesuré de la base en fonction de la forme mesurée de la base, déterminer un profil planifié de la base en fonction du plan de dépôt et calculer une quantité d'écart du profil mesuré par rapport au profil planifié ; et
un processus de correction préalable consistant à corriger une condition de soudage de la seconde pluralité des cordons de soudure (B2) constituant la couche de cordons de soudure dans le plan de dépôt afin de réduire la quantité d'écart lorsque la couche de cordons de soudure est déposée sur la base ; et
dans lequel dans le processus de mesure préalable, une forme d'un côté interne de la portion de cadre, le côté interne incluant la portion de cadre, est mesurée le long de la portion de cadre.

2. Procédé de fabrication d'un objet fabriqué de manière additive selon la revendication 1, dans lequel dans le processus de mesure préalable, la forme de la base est mesurée par un capteur de forme agencé parallèlement à un chalumeau configuré pour faire fondre le métal d'apport pour former le cordon de soudure.

3. Procédé de fabrication d'un objet fabriqué de manière additive selon la revendication 2, dans lequel dans le processus de mesure préalable, la forme est mesurée à la condition que le capteur de forme soit incliné vers l'intérieur par rapport à la portion de cadre.

4. Procédé de fabrication d'un objet fabriqué de manière additive selon la revendication 2, dans lequel l'étape de construction interne inclut un processus de correction en temps réel, et dans le processus de correction en temps réel, la forme de la base est mesurée par le capteur de forme, et la seconde pluralité des cordons de soudure (B2) sont formés tout en corrigeant la condition de soudage de la seconde pluralité des cordons de soudure (B2) en fonction du plan de dépôt en temps réel en fonction de la forme mesurée de la base.

5. Procédé de fabrication d'un objet fabriqué de manière additive selon la revendication 3, dans lequel l'étape de construction interne inclut un processus de correction en temps réel, et dans le processus de correction en temps réel, la forme de la base est mesurée par le capteur de forme, et la seconde pluralité des cordons de soudure (B2) sont formés tout en corrigeant la condition de soudage de la seconde pluralité des cordons de soudure (B2) en fonction du plan de dépôt en temps réel en fonction de la forme mesurée de la base.
